# EUROPÄISCHE PATENTSCHRIFT

(11) **EP 2 208 280 B1**
(45) Veröffentlichungstag und Bekanntmachung des Hinweises auf die Patenterteilung: **22.06.2011**
(21) Anmeldenummer: 08838711.3
(22) Anmeldetag: 06.10.2008
(51) Int. Cl.: H02K 1/18

(54) **VERFAHREN ZUR FIXIERUNG EINES RINGFÖRMIGEN SEGMENTPAKETES MIT ZYLINDRISCHER AUSSENWAND IN EINEM RINGFÖRMIGEN GEHÄUSE**
METHOD FOR FIXING AN ANNULAR SEGMENT PACKAGE HAVING A CYLINDRICAL OUTER WALL IN AN ANNULAR HOUSING
PROCÉDÉ POUR FIXER UN ENSEMBLE DE SEGMENTS ANNULAIRES À PAROI EXTERNE CYLINDRIQUE DANS UN BOÎTIER ANNULAIRE

(30) Priorität: 10.10.2007 DE 102007048499
(43) Veröffentlichungstag der Anmeldung: 21.07.2010
(73) Patentinhaber: Continental Automotive GmbH, 30165 Hannover (DE)
(72) Erfinder: PLOCH, Markus, 65197 Wiesbaden (DE); WILHELM, Hans-Dieter, 64295 Darmstadt (DE)
(86) Internationale Anmeldenummer: PCT/EP2008/063321
(87) Internationale Veröffentlichungsnummer: WO 2009/050049

(56) Entgegenhaltungen:
- DE-A1- 1 908 656
- DE-A1- 10 018 926
- DE-C- 617 562
- FR-A- 2 596 929
- US-A- 1 978 100
- US-A- 5 744 888

## Beschreibung

Die Erfindung bezieht sich auf ein Verfahren zur Fixierung eines ringförmigen Segmentpaketes mit zylindrischer Außenwand in einem ringförmigen Gehäuse. Ringförmige Segmentpakete sind bekannt. Sie haben eine unterschiedliche Funktionsweise und müssen vor dem Einbau in ringförmigen Gehäusen vorher aus ihren Einzelsegmenten zusammengebaut werden. Solche ringförmigen Segmentpakete bestehen, ebenso wie die ringförmigen Gehäuse, in denen sie fixiert werden sollen, meist aus metallischen Werkstoffen. In der Praxis werden zur Fixierung dabei dann die Gehäuse erhitzt, die dadurch eine Ausdehnung erfahren. Anschließend werden die ringförmigen Segmentpakete in die jeweiligen ringförmigen Gehäuse eingebracht und jede Kombination anschließend gekühlt. Durch die Kühlwirkung zieht sich das Gehäuse zusammen, was zu einer festen Fixierung des ringförmigen Segmentpaketes im ringförmigen Gehäuse durch Verpressung führt. Bei dieser Vorgehensweise ist jedoch nachteilig, dass das ringförmige Gehäuse homogen aufgeheizt werden muss, was oftmals nicht leicht zu realisieren ist. Bei der abschließenden Kühlung kommt es oftmals zu unterschiedlichen Krafteinwirkungen auf die ringförmigen Segmentpakete, was ebenfalls in vielen Fällen nicht erwünscht ist.

Aus der US 1,978,100 A ist ein Verfahren zur Fixierung eines ringförmigen Segmentpaketes mit zylindrischer Außenwand in einem ringförmigen Gehäuse bekannt. Bei diesem Verfahren wird das ringförmige Segmentpaket entweder zunächst in das ringförmige Gehäuse eingebracht und anschließend eine ringförmige Hülse zwischen dem ringförmigen Segmentpaket und dem ringförmigen Gehäuse eingebracht und beiderseits verpresst, oder das Segmentpaket wird zunächst in die ringförmige Hülse eingebracht und verpresst und anschließend wird die ringförmige Hülse zusammen mit dem ringförmigen Segmentpaket in das ringförmige Gehäuse eingebracht und verpresst. Die Innentwand des ringförmigen Gehäuses ist hier ohne Konus, also mit konstantem Innendurchmesser ausgebildet.

Die US 5,744,888 A zeigt ein Segmentpaket einer elektrischen Maschine mit einem äußeren Rotor, der mittels einer konischen Hülse auf einem inneren Gehäuse mit einem Außenkonus montiert wird.

Der Erfindung liegt daher die Aufgabe zugrunde, ein Verfahren zur Fixierung eines ringförmigen Segmentpaketes mit zylindrischer Außenwand in einem ringförmigen Gehäuse zu schaffen, dass relativ problemlos und einfach durchgeführt werden kann, wobei die unterschiedlichen nachteiligen Krafteinwirkungen auf das ringförmige Segmentpaket vermieden werden.

Die der Erfindung zugrunde liegende Aufgabe wird durch ein Verfahren zur Fixierung eines ringförmigen Segmentpaketes mit zylindrischer Außenwand in einem ringförmigen Gehäuse, dessen Innenwand in Form eines Innenkonus ausgebildet ist, gelöst, bei dem das ringförmige Segmentpaket entweder zunächst in das ringförmige Gehäuse eingebracht wird und anschließend eine ringförmige Hülse, deren Außenwand in Form eines zum Innenkonus des ringförmigen Gehäuses kompatibel ausgebildeten Außenkonus ausgebildet ist, zwischen dem ringförmigen Segmentpaket und dem ringförmigen Gehäuse eingebracht und beidseitig verpresst wird, oder zunächst in die ringförmige Hülse eingebracht und verpresst wird und anschließend die ringförmige Hülse zusammen mit dem ringförmigen Segmentpaket in das ringförmige Gehäuse eingebracht und verpresst wird. Das Verpressen des ringförmigen Segmentpaketes in der ringförmigen Hülse wird beispielsweise dadurch gewährleistet, dass die ringförmige Hülse eine zylindrische Innenwand aufweist, deren Durchmesser nahezu dem Durchmesser der zylindrischen Außenwand des ringförmigen Segmentpaketes entspricht. Die Wahl der jeweiligen Innen- beziehungsweise Außendurchmesser wird ingenieurmäßig dabei so vorgenommen, dass das ringförmige Segmentpaket durch entsprechende Krafteinwirkung in die ringförmige Hülse eingeführt und durch Kraftschluss verpresst wird. In ähnlicher Weise erfolgt das Verpressen der ringförmigen Hülse im ringförmigen Gehäuse. Der Innenkonus des ringförmigen Gehäuses wird dabei kompatibel zum ausgebildeten Außenkonus der ringförmigen Hülse ingenieurmäßig derart ausgeführt, dass die ringförmige Hülse durch entsprechende Krafteinwirkung in das ringförmige Gehäuse eingebracht und durch Formschluss verpresst wird. Sowohl die ringförmige Hülse als auch das ringförmige Gehäuse bestehen dabei für vielerlei Einsatzzwecke aus metallischen Werkstoffen, was jedoch nicht zwingend erforderlich ist. Es hat sich in überraschender Weise gezeigt, dass eine Fixierung des ringförmigen Segmentpaketes in dem ringförmigen Gehäuse auf relativ einfache, unproblematische Weise erfolgen kann, wenn zwischen dem ringförmigen Segmentpaket und des ringförmigen Gehäuses die entsprechende ringförmige Hülse verpresst wird, wobei auf eine nachteilige Aufheizung des ringförmigen Gehäuses vollständig verzichtet werden kann. Durch die entsprechende zueinander kompatible Ausgestaltung von Innenkonus und Außenkonus wird dabei sichergestellt, dass das ringförmige Segmentpaket während der Fixierung über seinen Umfang gesehen gleichmäßig mit Kräften beaufschlagt wird, so dass Schädigungen des ringförmigen Segmentpaketes durch stark unterschiedliche Krafteinwirkungen vermieden werden können. Bei der Durchführung des Verfahrens sind zwei alternativ technisch gleichwertige Verfahrensmethoden denkbar. Nach der ersten Methode wird das ringförmige Segmentpaket zunächst in das ringförmige Gehäuse eingebracht und anschließend die ringförmige Hülse zwischen dem ringförmigen Segmentpaket und dem ringförmigen Gehäuse beidseitig verpresst. Nach der anderen Methode ist es vorgesehen, dass ringförmige Segmentpaket zunächst in die ringförmige Hülse einzubringen und mit dieser zu verpressen. Anschließend wird die Kombination aus ringförmigem Segmentpaket und ringförmiger Hülse in das ringförmige Gehäuse eingebracht und mit diesem verpresst. Die zweite Methode ist besonders dann vorteilhaft, wenn eine Vormontage vorgesehen ist. Welche Methode gewählt wird, ist von Fall zu Fall verschieden und richtet sich beispielsweise nach dem Kundenwunsch.

Eine bevorzugte Ausgestaltung der Erfindung sieht vor, dass ein gemeinsamer Winkel γ für den Innenkonus und für den Außenkonus im Bereich von 2 bis 5° gewählt wird. Auf diese Weise wird eine gute Verpressung der ringförmigen Hülse zwischen dem ringförmigen Segmentpaket und dem ringförmigen Gehäuse gewährleistet, die für besonders viele Einsatzzwecke geeignet ist.

Gemäß einer weiteren bevorzugten Ausgestaltung der Erfindung wird eine ringförmige Hülse eingesetzt, die ausgehend von der Außenkante mit dem kleinsten Außendurchmesser des Außenkonus parallel zur Längsachse der ringförmigen Hülse nebeneinander angeordnete Längsschlitze aufweist, deren jeweilige Länge 1 kleiner ist als die Breite der ringförmigen Hülse. Durch die Anordnung der Längsschlitze können bei der Fixierung auf relativ einfache und vorteilhafte Weise Toleranzen ausgeglichen werden, was das jeweilige Verpressen erleichtert.

Nach einer weiteren Ausgestaltung der Erfindung wird die Länge 1 der jeweiligen Längsschlitze größer gewählt als die Breite b des ringförmigen Segmentpaketes. Auf diese Weise wird der Vorgang des Verpressens optimiert und die Fixierung der ringförmigen Segmentpaketes im ringförmigen Gehäuse erleichtert.

Nach einer weiteren bevorzugten Ausgestaltung der Erfindung wird die ringförmige Hülse in im ringförmigen Gehäuse verpresstem Zustand mit der Außenkante mit dem kleinsten Außendurchmesser des Außenkonus an einem Anschlag anliegend angeordnet. In den meisten Fällen ist es dabei besonders vorteilhaft, wenn der Anschlag selbst ein Teil des ringförmigen Gehäuses ist. Auf diese Weise wird ein besonders guter Sitz der ringförmigen Hülse im ringförmigen Gehäuse und damit eine optimale Fixierung des ringförmigen Segmentpaketes erreicht.

Gemäß einer weiteren bevorzugten Ausgestaltung der Erfindung werden als ringförmiges Segmentpaket ein ringförmiges Statorblechpaket eines Elektromotors und als ringförmiges Gehäuse ein Statorgehäuse eines Elektromotors angeordnet. Zur erleichterten Anordnung der Statorwicklungen hat es sich als besonders vorteilhaft herausgestellt, den Stator für einen Elektromotor aus einem Paket von einzelnen Statorblecheinheiten zusammenzusetzen. Jede Statorblecheinheit enthält dabei einen Teil der Wicklungen, die zusammen dann die gesamte Statorwicklung bilden. Bei der Fixierung des ringförmigen Statorblechpaketes im Statorgehäuse kann es besonders vorteilhaft sein, auf eine Erwärmung des Statorgehäuses zu verzichten. Das Verfahren ermöglicht eine besonders vorteilhafte Fixierung des ringförmigen Statorblechpaketes im Statorgehäuse, wobei auf die nachteilige Erwärmung des Statorgehäuses als vorbereitende Maßnahme gänzlich verzichtet werden kann.

Nach einer weiteren Ausgestaltung der Erfindung ist es vorgesehen, dass als Elektromotor ein Elektromotor für ein Hybridauto eingesetzt wird. An die Elektromotoren für Hybridautos werden in der Regel hohe Anforderungen gestellt. Dazu gehört auch, dass es erforderlich ist, das ringförmige Segmentpaket, das dann als ringförmiges Statorblechpaket ausgebildet ist, besonders gut im Statorgehäuse zu fixieren. Nach dem Verfahren werden die hohen Anforderungen in besonders vorteilhafter und einfacher Weise erfüllt.

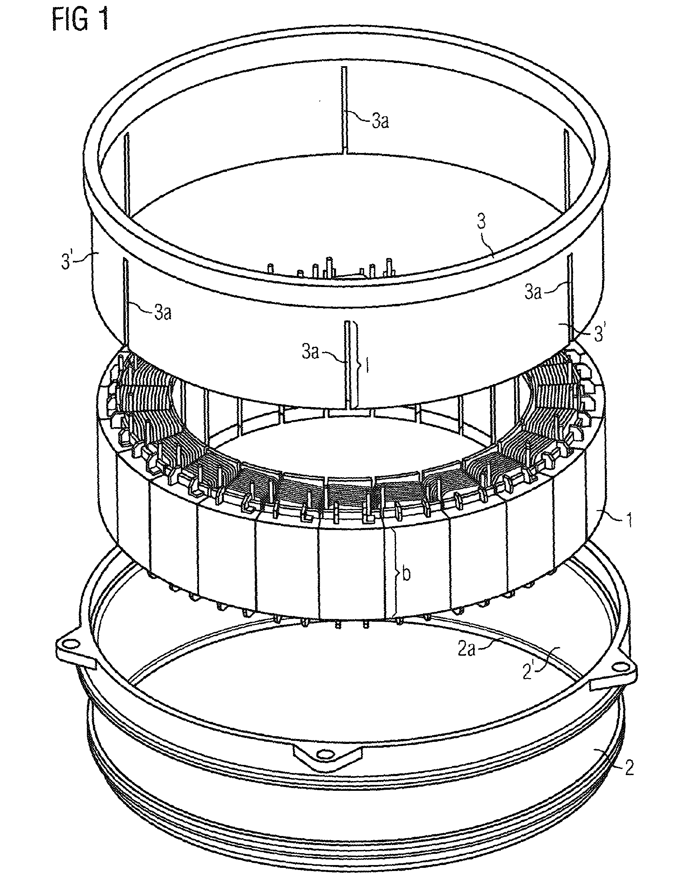

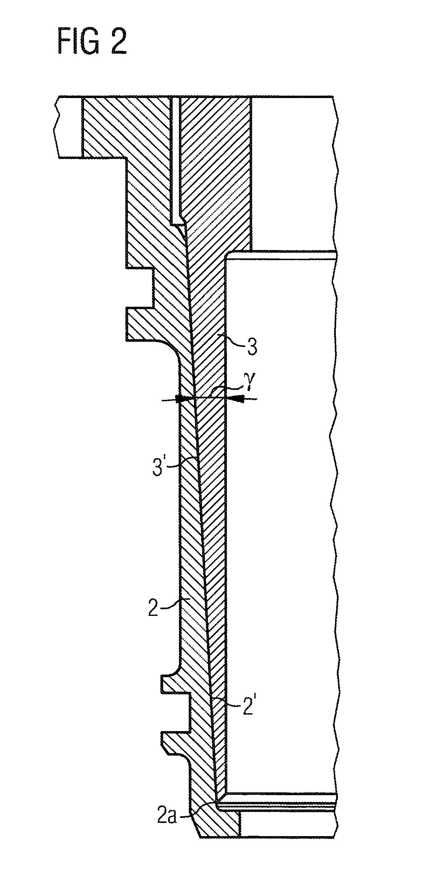

Die Erfindung wird nachfolgend anhand der Zeichnung (Fig. 1, Fig. 2) näher und beispielhaft erläutert.
- Fig. 1: zeigt die Anordnung des ringförmigen Segmentpaketes, des ringförmigen Gehäuses und der ringförmigen Hülse dreidimensional zueinander in Form einer Explosionszeichnung.
- Fig. 2: zeigt das ringförmige Gehäuse und die ringförmige Hülse im verpressten Zustand im Längsschnitt.

In Fig. 1 sind das ringförmige Segmentpaket 1, das ringförmige Gehäuse 2 und die ringförmige Hülse 3 dreidimensional dargestellt. Bei dem Verfahren zur Fixierung des ringförmigen Segmentpaketes 1 mit zylindrischer Außenwand in einem ringförmigen Gehäuse 2, dessen Innenwand 2' in Form eines Innenkonus ausgebildet ist, wird das ringförmige Segmentpaket 1 entweder zunächst in das ringförmige Gehäuse 2 eingebracht und anschließend die ringförmige Hülse 3, deren Außenwand 3' in Form eines zum Innenkonus des ringförmigen Gehäuses 2 kompatibel ausgebildeten Außenkonus ausgebildet ist, zwischen dem ringförmigen Segmentpaket 1 und dem ringförmigen Gehäuse 2 eingebracht und beidseitig verpresst, oder das ringförmige Segmentpaket 1 wird zunächst in die ringförmige Hülse 3 eingebracht und verpresst, und anschließend wird die Kombination aus ringförmigem Segmentpaket 1 und ringförmiger Hülse 3 in das ringförmige Gehäuse 2 eingebracht und verpresst. Um die Fixierung des ringförmigen Segmentpaketes 1 im ringförmigen Gehäuse 2 mit Hilfe der ringförmigen Hülse 3 zu erleichtern, wird in besonders vorteilhafter Weise dazu eine ringförmige Hülse 3 eingesetzt, die ausgehend von der Außenkante mit dem kleinsten Außendurchmesser des Außenkonus parallel zur Längsachse der ringförmigen Hülse 3 nebeneinander angeordnet Längsschlitze 3a aufweist, deren jeweilige Länge 1 kleiner ist als die Breite der ringförmigen Hülse 3. In besonders vorteilhafter Weise wird eine Länge 1 der jeweiligen Längsschlitze 3a gewählt, die größer ist als die Breite b des ringförmigen Segmentpaketes 1. Die Anordnung der ringförmigen Hülse 3 im ringförmigen Gehäuse 2 wird in besonders vorteilhafter Weise dadurch erleichtert, dass die ringförmige Hülse 3 in im ringförmigen Gehäuse 2 verpresstem Zustand mit der Außenkante mit dem kleinsten Außendurchmesser des Außenkonus an einem Anschlag 2a anliegend angeordnet wird. Aus praktischen Gründen ist es dabei sinnvoll, den Anschlag 2a zum ringförmigen Gehäuse 2 gehörig anzuordnen. Als ringförmiges Segmentpaket 1 ist hier ein ringförmiges Statorblechpaket eines Elektromotors (nicht dargestellt) und als ringförmiges Gehäuse 2 ein Statorgehäuse eines Elektromotors angeordnet. Das Verfahren ist besonders für den Einsatzzweck vorteilhaft, nach welchem es vorgesehen ist, einen Elektromotor für ein Hybridauto (nicht dargestellt) einzusetzen.

In Fig. 2 sind das ringförmige Gehäuse 2 und die ringförmige Hülse 3 im verpressten Zustand im Längsschnitt dargestellt. Auf die Darstellung des ringförmigen Segmentpaketes mit zylindrischer Außenwand wurde bei dieser Darstellung aus Gründen der Übersichtlichkeit verzichtet. Die ringförmige Hülse 3 ist im ringförmigen Gehäuse 2 derart angeordnet, dass sie mit der Außenkante mit dem kleinsten Außendurchmesser des Außenkonus an einem Anschlag 2a anliegt, der Teil des ringförmigen Gehäuses 2 ist. Für den Innenkonus und für den Außenkonus wird dabei in der Regel ein gemeinsamer Winkel γ gewählt, der im Bereich von 2 bis 5° ausgebildet ist. Die Ausbildung der Außenwand 3' in Form eines zum Innenkonus des ringförmigen Gehäuses 2 kompatibel ausgebildeten Außenkonus ermöglicht durch ingenieurmäßige Auslegung ein festes Verpressen der ringförmigen Hülse 3 mit dem ringförmigen Gehäuse 2. Die Innenwand 2' des ringförmigen Gehäuses 2 und die Außenwand 3' der ringförmigen Hülse 3 werden auf diese Weise kraftschlüssig miteinander fest verbunden beziehungsweise verpresst.

## Patentansprüche

1. Verfahren zur Fixierung eines ringförmigen Segmentpakets (1) mit zylindrischer Außenwand in einem ringförmigen Gehäuse (2), dessen Innenwand (2') in Form eines Innenkonus ausgebildet ist, bei dem das ringförmige Segmentpaket (1) entweder zunächst in das ringförmige Gehäuse (2) eingebracht wird und anschließend eine ringförmige Hülse (3), deren Außenwand (3') in Form eines zum Innenkonus des ringförmigen Gehäuses (2) kompatibel ausgebildeten Außenkonus ausgebildet ist, zwischen dem ringförmigen Segmentpaket (1) und dem ringförmigen Gehäuse (2) eingebracht und beidseitig verpresst wird, oder zunächst in die ringförmige Hülse (3) eingebracht und verpresst wird, und anschließend die ringförmige Hülse (3) zusammen mit dem ringförmigen Segmentpaket (1) in das ringförmige Gehäuse (2) eingebracht und verpresst wird.

2. Verfahren nach Anspruch 1, bei dem ein gemeinsamer Winkel γ für den Innenkonus und für den Außenkonus im Bereich von 2 bis 5° gewählt wird.

3. Verfahren nach Anspruch 1 oder Anspruch 2, bei dem eine ringförmige Hülse (3) eingesetzt wird, die ausgehend von der Außenkante mit dem kleinsten Außendurchmesser des Außenkonus parallel zur Längsachse der ringförmigen Hülse (3) nebeneinander angeordnete Längsschlitze (3a) aufweist, deren jeweilige Länge 1 kleiner ist als die Breite der ringförmigen Hülse (3).

4. Verfahren nach Anspruch 3, bei dem die Länge 1 der jeweilige Längsschlitze (3a) größer gewählt wird als die Breite b des ringförmigen Segmentpaketes (1).

5. Verfahren nach einem der Ansprüche 1 bis 4, bei dem die ringförmige Hülse (3) in im ringförmigen Gehäuse (2) verpresstem Zustand mit der Außenkante mit dem kleinsten Außendurchmesser des Außenkonus an einem Anschlag (2a) anliegend angeordnet wird.

6. Verfahren nach einem der Ansprüche 1 bis 5, bei dem als ringförmiges Segmentpaket (1) ein ringförmiges Statorblechpaket eines Elektromotors und als ringförmiges Gehäuse (2) ein Statorgehäuse eines Elektromotors angeordnet werden.

7. Verfahren nach Anspruch 6, bei dem als Elektromotor ein Elektromotor für ein Hybridauto eingesetzt wird.

## Claims

1. Method for fixing an annular segment package (1) with a cylindrical outer wall in an annular housing (2), whose inner wall (2') is in the form of an inner cone, in which the annular segment package (1) is either first of all introduced into the annular housing (2) and then an annular sleeve (3), whose outer wall (3') is in the form of an outer cone which is designed to be compatible with the inner cone of the annular housing (2), is introduced between the annular segment package (1) and the annular housing (2) and is compressed on both sides, or it is first of all introduced into the annular sleeve (3) and is compressed, and the annular sleeve (3) is then introduced into the annular housing (2), together with the annular segment package (1), and is compressed.

2. Method according to Claim 1, in which a common angle γ for the inner cone and for the outer cone is chosen in the range from 2 to 5°.

3. Method according to Claim 1 or Claim 2, in which an annular sleeve (3) is used which, starting from the outer edge with the smallest external diameter of the outer cone, has longitudinal slots (3a) which are arranged alongside one another parallel to the longitudinal axis of the annular sleeve (3) and whose respective length 1 is less than the width of the annular sleeve (3).

4. Method according to Claim 3, in which the length 1 of the respective longitudinal slots (3a) is chosen to be greater than the width b of the annular segment package (1).

5. The method according to one of claims 1 to 4, in which the annular sleeve (3) is arranged with the outer edge with the smallest external diameter of the outer cone resting on a stop (2a), in the state in which it is compressed in the annular housing (2).

6. Method according to one of Claims 1 to 5, in which an annular stator laminated core of an electric motor is arranged as the annular segment package (1), and a stator housing of an electric motor is arranged as the annular housing (2).

7. Method according to Claim 6, in which an electric motor for a hybrid car is used as the electric motor.

## Revendications

1. Procédé permettant de fixer un ensemble (1) de segments annulaires à paroi extérieure cylindrique dans un boîtier annulaire (2) dont la paroi intérieure (2') a la forme d'un cône intérieur, procédé au cours duquel ou bien l'ensemble (1) de segments annulaires est d'abord introduit dans le boîtier annulaire (2) et, ensuite, une douille annulaire (3), dont la paroi extérieure (3') a la forme d'un cône extérieur compatible avec le cône intérieur du boîtier annulaire (2), est introduite entre l'ensemble (1) de segments annulaires et le boîtier annulaire (2) et est pressée des deux côtés, ou bien l'ensemble (1) de segments annulaires est d'abord introduit dans la douille annulaire (3) et pressé et, ensuite, la douille annulaire (3) avec l'ensemble (1) de segments annulaires est introduite dans le boîtier annulaire (2) et est pressée.

2. Procédé selon la revendication 1, au cours duquel on choisit, pour le cône intérieur et pour le cône extérieur, un angle commun γ compris dans la plage de 2 à 5°.

3. Procédé selon la revendication 1 ou la revendication 2, au cours duquel on met en oeuvre une douille annulaire (3) qui a, en partant de l'arête extérieure avec le diamètre extérieur le plus petit du cône extérieur, des fentes longitudinales (3a) disposées l'une à côté de l'autre parallèlement à l'axe longitudinal de la douille annulaire (3) et dont la longueur respective 1 est inférieure à la largeur de la douille annulaire (3).

4. Procédé selon la revendication 3, au cours duquel la longueur 1 des fentes longitudinales (3a) respectives est plus grande que la largeur b de l'ensemble (1) de segments annulaires.

5. Procédé selon l'une des revendications 1 à 4, au cours duquel la douille annulaire (3), dans son état pressé dans le boîtier annulaire (2), est placée de manière telle que son arête extérieure avec le diamètre extérieur le plus petit du cône extérieur est appliquée sur une butée (2a).

6. Procédé selon l'une des revendications 1 à 5, au cours duquel, en tant qu'ensemble (1) de segments annulaires, un ensemble (1) de tôles de stator annulaires d'un moteur électrique et, en tant que boîtier annulaire (2), une carcasse de stator d'un moteur électrique sont mis en place.

7. Procédé selon la revendication 6, au cours duquel, en tant que moteur électrique, un moteur électrique pour véhicule hybride est mis en oeuvre.
